# EUROPÄISCHE PATENTANMELDUNG

(11) **EP 4 840 723 A1**
(43) Veröffentlichungstag der Anmeldung: **18.11.2026**
(21) Anmeldenummer: 26178080.3
(22) Anmeldetag: 11.05.2026
(51) Int. Cl.: B62D 5/04

(54) **STEER-BY-WIRE (SBW) LENKSYSTEM FÜR EIN FAHRZEUG UND VERFAHREN ZUM BETREIBEN EINES DERARTIGEN LENKSYSTEMS**

(30) Priorität: 16.05.2025 DE 102025119171
(71) Anmelder: Volkswagen Aktiengesellschaft, 38440 Wolfsburg (DE)
(72) Erfinder: Baars, Maximilian, 38440 Wolfsburg (DE); Spende, Hendrik, 38440 Wolfsburg (DE); Lippke, Björn, 38440 Wolfsburg (DE)

(57) **Zusammenfassung**

Die Erfindung betrifft eine Steer-by-Wire (SbW) Lenksystem (1) für ein Fahrzeug, insbesondere für ein Kraftfahrzeug, wobei das Lenksystem (1) ausgestaltet ist, abhängig von einer Lenkvorgabe, die einem Fahrer-Wunsch des Fahrers des Fahrzeugs entspricht, mittels einer Lenkmechanik (8) einen Lenkwinkel zumindest eines gelenkten Rades (9) des Fahrzeugs einzustellen, und ausgestaltet ist, eine Änderung der Lenkvorgabe gemäß einer ersten Übersetzungsvorgabe in eine Änderung einer Position der Lenkmechanik (8) umzusetzen.

Das Lenksystem (1) weist eine Übersetzungsvorgabe-Änderungseinrichtung (12) auf, die ausgestaltet ist, abhängig von einer Information (17) über einen geänderten Zustand einer Einrichtung oder eines Systems des Fahrzeugs die erste Übersetzungsvorgabe durch eine zweite Übersetzungsvorgabe für die Umsetzung der Änderung der Lenkvorgabe in die Änderung der Position der Lenkmechanik (8) zu ersetzen.

## Beschreibung

Die Erfindung betrifft ein Steer-by-Wire (SbW) Lenksystem für ein Fahrzeug, insbesondere für ein Kraftfahrzeug, wobei das Lenksystem ausgestaltet ist, abhängig von einer Lenkvorgabe, die einem Fahrer-Wunsch des Fahrers des Fahrzeugs entspricht, mittels einer Lenkmechanik einen Lenkwinkel zumindest eines gelenkten Rades des Fahrzeugs einzustellen und ausgestaltet ist, eine Änderung der Lenkvorgabe gemäß einer Übersetzungsvorgabe in eine Änderung einer Position der Lenkmechanik umzusetzen. Ferner betrifft die Erfindung ein Verfahren zum Betreiben eines derartigen Steer-by-Wire (SbW) Lenksystems. Zum Umfang der Erfindung gehören auch ein Fahrzeug, insbesondere Kraftfahrzeug, mit dem Lenksystem und ein Verfahren zum Lenken eines Fahrzeugs, insbesondere Kraftfahrzeugs, das das Verfahren zum Betreiben des Lenksystems beinhaltet.

Steer-by-Wire (SbW) Lenksysteme, welche zukünftig im Automobilbereich in Großserie eingesetzt werden können, müssen eine deutlich höhere Ausfallsicherheit aufweisen als konventionelle Lenksysteme. Grund dafür ist, dass SbW-Lenksysteme über keine mechanische Verbindung zwischen Lenkrad und Lenkgetriebe verfügen. Ein kompletter Ausfall des elektrischen Teils des Lenksystems würde dazu führen, dass das Fahrzeug nicht mehr lenkbar wäre.

Wesentliche Komponenten eines SbW-Lenksystem sind typischer Weise ein Force-Feedback Aktuator (FFA), welcher den gewünschten Lenkwinkel erfasst und dem Fahrer ein Feedbackmoment bereitstellt, sowie ein gesteuertes Lenkgetriebe (SbW-EPS, Englisch: electric power steering), welches den vom FFA empfangenen Fahrerwunsch in eine Radlenkbewegung umsetzt. Allgemeiner formuliert meist ein SbW-Lenksystem eine Stellvorrichtung auf, die abhängig von einer vom Fahrer des Fahrzeugs erhaltenen Lenkvorgabe eine Stellgröße (z. B. eine Stellkraft oder ein Stellmoment) oder eine Summe von Stellgrößen erzeugt, durch die ein Lenkwinkel des Lenksystems (d.h. ein Lenkwinkel zumindest eines Rades des Fahrzeugs) eingestellt wird.

Der sichere Zustand im SbW-System ist "fail-operational", d.h., dass nach einem Erstfehler im Fahrzeug die Verfügbarkeit der Lenkfunktionen weiterhin gegeben sein muss. Ein Ausschalten des SbW-Lenksystems ist ausgeschlossen. Dies bedingt ein redundantes Design der Stellvorrichtung, insbesondere mit zumindest zwei Steuer- und Versorgungs-Einrichtungen, die jeweils einen Stellantrieb steuern und mit elektrischer Energie versorgen. In der Praxis sind die Stellantriebe häufig als separate Wechselrichter mit jeweils einer elektrisch angeschlossenen Stator-Wicklungsanordnung ausgeführt, wobei das von den verschiedenen Stator-Wicklungsanordnungen erzeugte rotierende Magnetfeld auf einen gemeinsamen Rotor wirkt. Anders ausgedrückt bilden die verschiedenen Stator-Wicklungsanordnungen und der Rotor einen gemeinsamen Elektromotor, der auch noch dann betreibbar ist, wenn nur eine der Stator-Wicklungsanordnungen bestromt wird. Jede Kombination einer der Stator-Wicklungsanordnungen mit dem Rotor kann als Teil-Motor aufgefasst werden.

Für SbW-Systeme sind Anforderungen an die Querführung definiert, welche auch im degradierten Zustand oder nach einem Erstfehler erfüllt werden müssen. Ein Erstfehler ist hierbei beispielweise der Ausfall einer der redundanten Spannungsversorgungen im Fahrzeug. Ein Derating der Lenkfunktionalitäten kann z. B. durch eine hohe Umgebungstemperatur und oder hohen Lenkleistungsbedarf auftreten, oder durch eine kalte Umgebungstemperatur welche im Fahrzeug zu einer begrenzt zur Verfügung stehenden und/oder eingeschränkten Spannungsversorgung führt. Im Zustand des Derating oder nach einem Erstfehler, welcher zu einer Degradation führt und zum Beispiel nur noch eine von zwei Spannungsversorgungen dem SbW-Lenksystem zur Verfügung steht, kann eine Überbelastung des elektrischen Bordnetzes ausgelöst durch den Leistungsbedarf der SbW-EPS dazu führen, dass die Spannungsversorgung zusammenbricht. Ein hoher Leistungsbedarf tritt insbesondere bei hohen Lenkwinkelgeschwindigkeiten am Lenkrad auf. Diese sorgen für eine schnelle Bewegung der Lenkmechanik, zum Beispiel der Verschiebung der Zahnstange, wofür eine hohe Leistung der Antriebe mit den Elektromotoren der SbW-EPS benötigt wird. Dies kann zu einem Ausfall der Spannungsversorgungen und oder SbW-EPS führen wodurch eine Querführung des Fahrzeugs nicht mehr möglich ist, was in jedem Fall zu vermeiden ist.

Die Erfindung kann insbesondere wie zuvor beschrieben ausgeführt sein, jedoch mit den zusätzlichen Merkmalen, die im Folgenden beschrieben werden.

Um einen Derating-Zustand oder einen Erstfehler, welcher zu einer Degradation führt, sodass unter Umständen nur noch eine von zum Beispiel zumindest zwei Spannungsversorgungen dem SbW-Lenksystem zur Verfügung steht, bei hohen Umgebungstemperaturen zu verhindern oder möglichst lange hinauszuzögern, ist es denkbar eine entsprechende Kühlung der Spannungsquellen (insbesondere die Speicher an Bord, aus denen elektrische Energie bezogen werden kann) und/oder des SbW-EPS vorzunehmen. Bei niedrigen Umgebungstemperaturen können analog dazu die Spannungsquellen und/oder das SbW-EPS geheizt werden. Alternativ oder zusätzlich kann eine größere Dimensionierung der Antriebe des SbW-EPS das Derating verzögern. Eine Kühlung und/oder Heizung bedeutet zusätzlichen Herstellungsaufwand und benötigt Energie zum Betrieb. Des Weiteren ist insbesondere bei hohen Umgebungstemperaturen ein Verhindern des Deratings in der SbW-EPS nur durch eine größere Dimensionierung des Antriebsmotors möglich, da dieser durch mehr Gesamtleistung im kleineren Lastbereich arbeitet. Eine Spannungsversorgung durch bspw. eine Batterie kann technologiebedingt bei tiefen Temperaturen weniger leisten. Dies bedeutet daher ebenfalls eine größere Dimensionierung des Energiespeichers.

Es ist eine Aufgabe der vorliegenden Erfindung, ein SbW-Lenksystem für ein Fahrzeug, insbesondere für ein Kraftfahrzeug anzugeben, mit dem die Wahrscheinlichkeit für einen Fehler oder ein Derating des SbW-Lenksystems reduziert werden kann. Es ist eine weitere Aufgabe, ein entsprechendes Verfahren zum Betreiben eines SbW Lenksystems und ein diese beinhaltendes Verfahren zum Lenken eines Fahrzeugs, insbesondere eines Kraftfahrzeugs, anzugeben. Die Erfindung betrifft auch ein Fahrzeug, insbesondere ein Kraftfahrzeug mit dem Lenksystem.

Es wird vorgeschlagen, die Lenkübersetzung derart zu verändern, dass bei gleicher Änderung der Lenkvorgabe (zum Beispiel bei gleicher Veränderung des Lenkradwinkels) eine geringere Leistung für die Einstellung der Lenkmechanik benötigt wird. Anders ausgedrückt, würde dieselbe Änderung der Lenkvorgabe als vor der Veränderung der Lenkübersetzung langsamer in eine Veränderung einer Position der Lenkmechanik und somit langsamer in eine Veränderung des Lenkwinkels umgesetzt. In diesem Sinne kann die Veränderung der Lenkübersetzung als Verkleinerung der Lenkübersetzung bezeichnet werden.

Die Lenkübersetzung wird verkleinert, wenn eine Information vorliegt über einen geänderten Zustand einer Einrichtung oder eines Systems des Fahrzeugs. Es handelt sich daher nicht um eine Veränderung der Lenkübersetzung abhängig vom Fahrzustand, wie zum Beispiel der Geschwindigkeit des Fahrzeugs. Insbesondere bedeutet die Information, dass ein Erstfehler des SbW-Lenksystems aufgetreten ist (das schließt zum Beispiel auch die Spannungsversorgung des Lenksystems ein) und/oder ein Derating des Lenksystems aufgetreten ist oder bevorsteht.

Der Zustand ist insbesondere ein Zustand der Leistungsfähigkeit und/oder Leistungsbereitschaft der Einrichtung oder des Systems des Fahrzeugs. Es handelt sich daher in diesem Fall auch nicht um einen Zustand bzw. eine Zustandsänderung, die im regulären Betrieb des Lenksystems auftritt, also in dem Betrieb des Lenksystems, wenn kein Derating oder Ausfall bevorsteht oder stattgefunden hat. Zum Beispiel handelt es sich daher nicht um einen Zustand der Erzeugung eines geringeren oder höheren Drehmoments an den Antrieben des Lenksystems, mit denen die Stellmechanik/Lenkmechanik bewegt wird. Dagegen führt zum Beispiel eine Zustandsänderung der Antriebe, die nur noch ein geringeres maximales Drehmoment als im regulären Betrieb ermöglicht, erfindungsgemäß zu der Verringerung der Lenkübersetzung.

Durch die Verringerung der Lenkübersetzung wird zum Beispiel die Zahnstange des Lenkgetriebes durch den Antrieb oder die Antriebe der SbW-EPS mit einer geringerer Geschwindigkeit verschoben. Dadurch werden Lastspitzen bedingt durch die Stromaufnahme des Antriebs oder der Antriebe der SbW-EPS vermieden und ein Derating bedingt durch Überlastung oder ein Ausfall der Spannungsversorgung verhindert oder zumindest verzögert. Zwar erfordert die Verringerung der Lenkübersetzung von Seiten des Fahrers eine Einschränkung des Komforts bei der Änderung der Lenkvorgabe (zum Beispiel eine schnellere Bewegung des Lenkrades). Dies kann jedoch angesichts der Erhöhung der Betriebssicherheit in Kauf genommen werden, da ein Derating oder gar ein Ausfall des Lenksystems zu einer gefährlichen Situation führen könnte. Des Weiteren ist keine größere Dimensionierung der Spannungsversorgung und/oder des Energiespeichers für die elektrische Energie erforderlich und besteht kein erhöhter Bedarf für die Kühlung sowohl des Energiespeichers als auch der Antriebe des Lenksystems. Auch müssen die Antriebe des SbW-EPS nicht zur Erhöhung der Ausfallsicherheit oder der Vermeidung des Deratings für eine höhere Leistung ausgelegt werden. Daher sind insbesondere auch keine größeren Querschnitte der für die Energieversorgung benötigten elektrischen Leitungen erforderlich. Durch das Verzögern und/oder die Vermeidung des Deratings und eines Ausfalls der Spannungsversorgung werden die Verfügbarkeit des Lenksystems und somit und die Sicherheit für den Fahrer und das Fahrzeug erhöht.

Insbesondere wird vorgeschlagen: Ein Steer-by-Wire (SbW) Lenksystem für ein Fahrzeug, insbesondere für ein Kraftfahrzeug, wobei das Lenksystem ausgestaltet ist, abhängig von einer Lenkvorgabe, die einem Fahrer-Wunsch des Fahrers des Fahrzeugs entspricht, mittels einer Lenkmechanik einen Lenkwinkel zumindest eines gelenkten Rades des Fahrzeugs einzustellen, und ausgestaltet ist, eine Änderung der Lenkvorgabe gemäß einer ersten Übersetzungsvorgabe in eine Änderung einer Position der Lenkmechanik umzusetzen. Erfindungsgemäß weist das Lenksystem eine Übersetzungsvorgabe-Änderungseinrichtung (im Folgenden kurz: Änderungseinrichtung) auf, die ausgestaltet ist, abhängig von einer Information über einen geänderten Zustand einer Einrichtung oder eines Systems des Fahrzeugs die erste Übersetzungsvorgabe durch eine zweite Übersetzungsvorgabe für die Umsetzung der Änderung der Lenkvorgabe in die Änderung der Position der Lenkmechanik zu ersetzen. Die Erfindung betrifft auch ein Fahrzeug, insbesondere ein Kraftfahrzeug, mit einem derartigen Lenksystem oder mit einem Lenksystem in einer der in dieser Beschreibung beschriebenen Ausgestaltungen.

Ferner wird vorgeschlagen: Ein Verfahren zum Betreiben eines Steer-by-Wire (SbW) Lenksystems in einem Fahrzeug, insbesondere in einem Kraftfahrzeug, wobei das Lenksystem ausgestaltet ist, abhängig von einer Lenkvorgabe, die einem Fahrer-Wunsch des Fahrers des Fahrzeugs entspricht, mittels einer Lenkmechanik einen Lenkwinkel zumindest eines gelenkten Rades des Fahrzeugs einzustellen, und ausgestaltet ist, eine Änderung der Lenkvorgabe gemäß einer ersten Übersetzungsvorgabe in eine Änderung einer Position der Lenkmechanik umzusetzen. Abhängig von einer Information über einen geänderten Zustand einer Einrichtung oder eines Systems des Fahrzeugs wird die erste Übersetzungsvorgabe durch eine zweite Übersetzungsvorgabe für die Umsetzung der Änderung der Lenkvorgabe in die Änderung der Position der Lenkmechanik ersetzt.

Die Änderung der Lenkübersetzung kann je nach Ausgestaltung von verschiedenen Einrichtungen und/oder Systemen des Fahrzeugs vorgenommen werden. Dementsprechend kann die Änderungseinrichtung in je nach Ausgestaltung unterschiedlicher Weise realisiert werden. Gemäß einer Ausgestaltung wird die Änderung von dem Lenksystem vorgenommen. Die Änderungseinrichtung ist zum Beispiel Teil der Umsetzungseinrichtung, die die Lenkvorgabe und insbesondere die Änderung der Lenkvorgabe des Fahrers in eine Steuerung der Antriebe der Lenkmechanik umsetzt. Die Umsetzungseinrichtung kann wiederum verschiedene Teile aufweisen, zum Beispiel eine Einrichtung zur Erzeugung einer Stellgröße für die Antriebe der SbW-EPS und/oder eine Einrichtung zur Verrechnung der Änderung der Lenkvorgabe mit einer aktuell gültigen Lenkübersetzung. Die Änderungseinrichtung kann insbesondere Teil einer dieser beiden Einrichtungen sein, wobei es sich bei diesen beiden Einrichtungen auch um Teile derselben Einrichtung handeln kann. Ferner alternativ kann die Änderungseinrichtung eine Einrichtung sein, die zwar eine Schnittstelle zur Übertragung der Information über die aktuell gültige Lenkübersetzung zu dem Lenksystem hat, jedoch nicht zu dem Lenksystem gehört. Zum Beispiel ist dies dann sinnvoll, wenn die Information über eine bevorstehende Einschränkung der Energieversorgung des Lenksystems oder über einen bevorstehenden Ausfall zumindest eines Teils der Energieversorgung von einem anderen System oder einer anderen Einrichtung des Fahrzeugs ermittelt wird. Diese andere Einrichtung oder das andere System kann dann die Änderungseinrichtung aufweisen. Außerdem ist es möglich, dass in dem Fahrzeug nicht nur eine Änderungseinrichtung vorhanden ist, die ausgestaltet ist, eine Änderung der Lenkübersetzung vorzunehmen. Zum Beispiel können mehrere (zumindest zwei) Änderungseinrichtungen an einen Datenbus (zum Beispiel CAN-Bus) angeschlossen sein und kann das Lenksystem die Information über die aktuell gültige Lenkübersetzung über den Datenbus oder alternativ über eine andere Schnittstelle wie die oben erwähnte Schnittstelle empfangen.

Die Erfindung kann wie oben bereits angedeutet eine Stellvorrichtung für ein Lenksystem eines Fahrzeugs, insbesondere eines Kraftfahrzeugs, aufweisen, die zumindest zwei zueinander redundante Steuer- und Versorgungs-Einrichtungen aufweist. Diese sind ausgestaltet, jeweils einen zugeordneten Stellantrieb zu steuern und mit elektrischer Energie zu versorgen, um mittels des Stellantriebs eine Stellkraft oder ein Stellmoment einzustellen, durch die/das der Lenkwinkel eingestellt wird. Da jede der Steuer- und Versorgungs-Einrichtungen jeweils einen zugeordneten Stellantrieb steuert und mit elektrischer Energie versorgt, gibt es zumindest einen Stellantrieb. Wie oben bereits ausgeführt, ist es in der Praxis aber üblich, dass zumindest Teile des Stellantriebs redundant ausgeführt sind, zum Beispiel wie oben beschrieben die Stator-Wicklungsanordnungen, deren rotierende Magnetfelder auf denselben Rotor eines gemeinsamen Elektromotors wirken. Es ist aber auch möglich, dass die Steuer- und Versorgungs-Einrichtungen separate Stellantrieb steuern und mit elektrischer Energie versorgen. Zum Beispiel kann eine erste der Steuer- und Versorgungs-Einrichtungen als Antrieb einen ersten Elektromotor versorgen und eine zweite der Steuer- und Versorgungs-Einrichtungen als Antrieb einen zweiten Elektromotor versorgen, der keinerlei gemeinsame Bauteile mit dem ersten Elektromotor hat. Mischformen dieser Ausführungsformen sind möglich, wenn mehr als zwei der Steuer- und Versorgungs-Einrichtungen vorhanden sind.

Die Stellkraft oder das Stellmoment, durch die/das der Lenkwinkel gemäß einer Stellgröße der SbW-EPS eingestellt wird, wird daher im Allgemeinen von einem Stellantrieb oder von einer Mehrzahl von Stellantrieben der Stellvorrichtung erzeugt. Dem einzigen Stellantrieb oder der Mehrzahl von Stellantrieb ist jeweils zumindest eine der Steuer- und Versorgungs-Einrichtungen zugeordnet, die den Stellantrieb oder den jeweiligen Stellantrieb steuert und mit elektrischer Energie versorgt.

Im Folgenden werden Ausgestaltungen des SbW-Lenksystems und des Verfahrens zum Betreiben eines Steer-by-Wire (SbW) Lenksystems beschrieben, die oder von denen Teile Gegenstand der abhängigen Patentansprüche sein können. Aus der Beschreibung von Ausgestaltungen des Lenksystems ergeben sich entsprechende Ausgestaltungen des Verfahrens und umgekehrt.

Die Einrichtung, auf die/das sich der geänderte Zustand bezieht, kann insbesondere Teil des Lenksystems sein und/oder eine Einrichtung zur Versorgung und/oder Steuerung des Lenksystems sein. Das System, auf die/das sich der geänderte Zustand bezieht, kann insbesondere das Lenksystem sein und/oder ein System zur Versorgung und/oder Steuerung des Lenksystems sein.

Im Folgenden wird auf den geänderten Zustand der Einrichtung oder des Systems des Fahrzeugs eingegangen. Abhängig von der Information über diesen geänderten Zustand wird die Lenkübersetzung geändert. Der geänderte Zustand ist gemäß einer Ausgestaltung ein Zustand, in dem eine höhere Wahrscheinlichkeit als in dem Zustand vor dem geänderten Zustand für ein Auftreten eines Fehlers oder einer Leistungsreduktion des Lenksystems besteht.

Insbesondere kann der geänderte Zustand sein:
- ein Zustand einer Überlastung eines Antriebs, insbesondere eines Stellmotors, der ausgestaltet ist, die Änderung der Position der Lenkmechanik zu bewirken,
- ein Zustand, in dem eine Leistungsfähigkeit eines Antriebs, insbesondere eines Stellmotors, eingeschränkt ist, der ausgestaltet ist, die Änderung der Position der Lenkmechanik zu bewirken, oder in dem Bedarf für eine reduzierte Maximalleistung des Antriebs besteht, insbesondere ein Zustand erhöhter Temperatur des Antriebs ist,
- ein Zustand einer erhöhten Belastung eines Energieversorgungssystems an Bord des Fahrzeugs, ein Zustand einer Überlastung des Energieversorgungssystems und/oder ein Fehlerzustand des Energieversorgungssystems, wobei das Energieversorgungssystem dazu ausgestaltet ist, zumindest einen Teil des Lenksystems mit Energie für einen Betrieb des Lenksystems zu versorgen, oder ein Zustand ist, in dem eine erhöhte Belastung oder eine Überlastung des Energieversorgungssystems vermieden werden soll, und/oder
- ein Zustand, in dem Bedarf für eine reduzierte mechanische Belastung der Lenkmechanik besteht.

Die Lenkvorgabe kann insbesondere ein Lenkradwinkel sein, der von dem Fahrer durch Drehen eines Lenkrades einstellbar ist. Insbesondere findet daher eine Änderung der Lenkvorgabe statt, wenn der Fahrer das Lenkrad dreht.

Ausführungsbeispiele der Erfindung werden nun unter Bezugnahme auf die beigefügte Zeichnung beschrieben. Die einzelnen Figuren der Zeichnung zeigen:
Fig. 1 schematisch ein SbW-Lenksystem und zusätzliche Einrichtungen, die eine Änderung der Lenkübersetzung ermöglichen,
Fig. 2 ein Flussdiagramm zur Erläuterung einer Ausführungsform des erfindungsgemäßen Verfahrens.

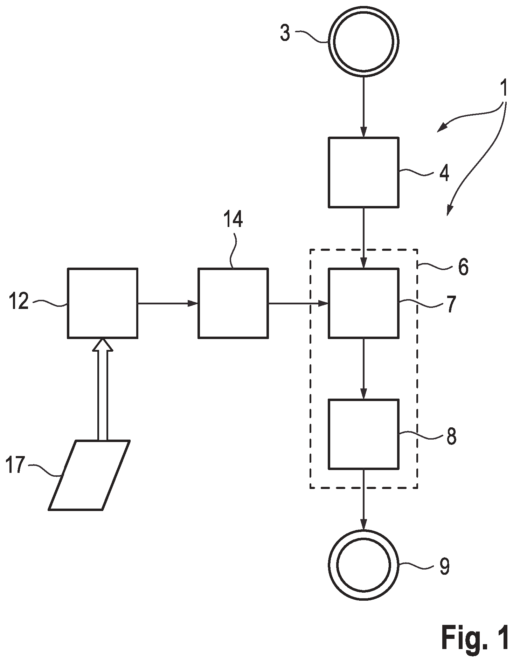

Das in Fig. 1 dargestellte Steer-by-Wire (SbW)-Lenksystem 1 weist einen Force-Feedback Aktuator (FFA) 4 auf, welcher ausgestaltet ist, einen Lenkradwinkel eines Lenkrades 3 eines Fahrzeugs, insbesondere eines Kraftfahrzeugs, zu erfassen. Das Lenksystem 1 weist ferner eine SbW-EPS 6 auf, d.h. eine Einheit oder Anordnung mit einer Stelleinrichtung 7, die abhängig von einer vom Fahrer des Fahrzeugs erhaltenen Lenkvorgabe eine Stellgröße (z. B. eine Stellkraft oder ein Stellmoment) oder eine Summe von Stellgrößen erzeugt, durch die ein Lenkwinkel des Lenksystems 1 (d.h. ein Lenkwinkel zumindest eines Rades 9 des Fahrzeugs) eingestellt wird. Der FFA 4 ist direkt (wie dargestellt) oder indirekt mit einer Stellvorrichtung 7 verbunden. Im Fall einer indirekten Verbindung kann die SbW-EPS 6, deren Grenzen in Fig. 1 durch ein gestrichelt dargestelltes Rechteck gekennzeichnet sind und die die Stelleinrichtung 7 und eine Lenkmechanik 8 aufweist, eine zusätzliche Einrichtung aufweisen, deren Signaleingang indirekt mit dem Signalausgang des FFA 4 verbunden ist. Eine indirekte Verbindung kann zum Beispiel über einen CAN-Bus oder über einen anderen Datenbus realisiert werden. Eine direkte Verbindung kann zum Beispiel über zumindest eine elektrische Leitung oder optische Leitung zur Übertragung der Signale des FFA 4 an die Stelleinrichtung 7 realisiert werden.

Ein Signalausgang der Stelleinrichtung 7 ist mit der Lenkmechanik 8 verbunden, die beispielsweise zumindest ein Lenkgetriebe aufweist. Die Lenkmechanik 8 ist mechanisch mit dem lenkbaren Rad 9 des Fahrzeugs gekoppelt. Im Betrieb stellt die Lenkmechanik 8 abhängig von dem von der Stelleinrichtung 7 empfangenen Signal (entsprechend einer Stellgröße) einen Lenkwinkel des Rades 9 ein, und zwar abhängig von der aktuell gültigen Lenkübersetzung und wie erwähnt abhängig von der Lenkvorgabe. Insbesondere kann von dem FFA 4 lediglich die Änderung der Lenkvorgabe an die Stelleinrichtung 7 übertragen werden.

Gemäß dem in Fig. 1 dargestellten Ausführungsbeispiel ist eine Lenkübersetzungseinrichtung 14 vorgesehen, vorgesehen, die mit der Stelleinrichtung 7 verbunden ist und die den aktuell gültigen Wert der Lenkübersetzung an die Stelleinrichtung 7 überträgt. Alternativ kann die Lenkübersetzungseinrichtung zum Beispiel in die Stelleinrichtung 7 oder zumindest in die SbW-EPS 6 integriert sein. In beiden Fällen ist wie dargestellt eine Übersetzungsvorgabe-Änderungseinrichtung 12 vorgesehen, die mit der Lenkübersetzungseinrichtung 14 verbunden ist und ausgestaltet ist, bei Bedarf eine Änderung der Lenkübersetzung vorzunehmen. Es ist auch möglich, dass die Übersetzungsvorgabe-Änderungseinrichtung 12 in die Stelleinrichtung 7 oder zumindest in die SbW-EPS 6 integriert ist. Ferner ist durch einen Pfeil angedeutet, dass die Übersetzungsvorgabe-Änderungseinrichtung 12 ausgestaltet ist, die Information 17 über einen geänderten Zustand einer Einrichtung oder eines Systems des Fahrzeugs zu empfangen, insbesondere von der Einrichtung oder dem System oder von einer anderen Einrichtung oder einem anderen System. Auf diverse Ausführungsformen wurde bereits eingegangen.

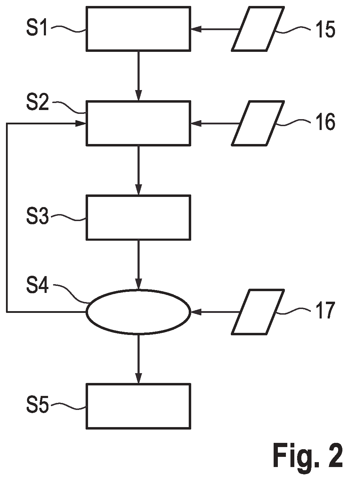

Das Verfahren zum Betreiben eines SbW-Lenksystems, zum Beispiel des Lenksystems 1 aus Fig. 1, kann zum Beispiel wie in dem schematischen Flussdiagramm von Fig. 2 dargestellt ausgeführt werden.

In einem ersten Schritt S1 wird der Betrieb des Lenksystems gestartet und ein Startwert 15 der Lenkübersetzung eingelesen. In dem folgenden Schritt S2 wird auf Basis des aktuellen Wertes 16 der Änderung der Lenkvorgabe des Fahrers (die zum Beispiel von dem FFA 4 aus Fig. 1 empfangen wird) eine Stellgröße für die Stelleinrichtung (zum Beispiel die Stelleinrichtung 7 aus Fig. 1) des SbW-EPS (zum Beispiel des SbW-EPS 6 aus Fig. 1) erzeugt. In dem folgenden Schritt S3 wird dementsprechend eine Veränderung des Lenkwinkels des Rades (zum Beispiel des Rades 9 aus Fig. 1) vorgenommen. Die Schritte S2 und S3 werden wiederholt ausgeführt, wenn eine Änderung der Lenkvorgabe und solange sich die Lenkübersetzung nicht ändert. Zur Feststellung, ob sich die Lenkübersetzung ändert, wird in dem auf Schritt S3 folgenden Schritt S4 geprüft, ob eine Information 17 über einen geänderten Zustand einer Einrichtung oder eines Systems des Fahrzeugs vorliegt. Ist dies nicht der Fall, wird das Verfahren wie erwähnt mit Schritt S2 fortgesetzt, in dem der aktuelle Wert 16 der Änderung der Lenkvorgabe verwendet wird. Liegt keine solche Änderung der Lenkvorgabe vor, wird das Verfahren 2 mit den Schritten S3 und S4 fortgesetzt, es wird jedoch in Schritt S3 keine Veränderung des Lenkwinkels vorgenommen.

Wenn aber in Schritt S4 festgestellt wird, dass eine Information 17 über einen geänderten Zustand einer Einrichtung oder eines Systems des Fahrzeugs vorliegt, dann wird die Lenkübersetzung entsprechend verringert.

Generell, nicht nur bei der hier beschriebenen Ausgestaltung, kann zum Beispiel ein Betrag oder Faktor der Änderung der Lenkübersetzung oder ein verringerter Wert der Lenkübersetzung fest vorgegeben sein und folgt daraus die geänderte, verringerte Lenkübersetzung. Alternativ kann die Verringerung der Lenkübersetzung von der Art der erhaltenen Information abhängen. Steht lediglich ein geringes Derating des Lenksystems bevor oder ist der Energiespeicher für den Bezug von elektrische Energie zum Betreiben des Lenksystems von einer niedrigen Temperatur oder einer hohen Temperatur betroffen, kann dies zu einer kleineren Verringerung der Lenkübersetzung führen als zum Beispiel in dem Fall, dass ein Teil der Energieversorgung für die Versorgung der Antriebe des SbW-EPS des Lenksystems ausgefallen ist oder einer der Antriebe des SbW-EPS des Lenksystems ausgefallen ist.

Im Fall eines Endes des Betriebes des Lenksystems endet das Verfahren mit dem auf Schritt S4 folgenden Schritt S5.

### Bezugszeichenliste

- 1: Steer-by-Wire (SbW)-Lenksystem
- 3: Lenkrad
- 4: Force-Feedback Aktuator (FFA)
- 6: SbW-EPS (electric power steering)
- 7: Stelleinrichtung
- 8: Lenkmechanik
- 9: lenkbares/gelenktes Rad des Fahrzeugs
- 12: Übersetzungsvorgabe-Änderungseinrichtung
- 14: Lenkübersetzungseinrichtung
- 15: Startwert der Lenkübersetzung
- 16: aktueller Wert der Änderung der Lenkvorgabe
- 17: Information über einen geänderten Zustand einer Einrichtung oder eines Systems des Fahrzeugs

## Patentansprüche

1. Steer-by-Wire (SbW) Lenksystem (1) für ein Fahrzeug, insbesondere für ein Kraftfahrzeug, wobei das Lenksystem (1) ausgestaltet ist, abhängig von einer Lenkvorgabe, die einem Fahrer-Wunsch des Fahrers des Fahrzeugs entspricht, mittels einer Lenkmechanik (8) einen Lenkwinkel zumindest eines gelenkten Rades (9) des Fahrzeugs einzustellen, und ausgestaltet ist, eine Änderung der Lenkvorgabe gemäß einer ersten Übersetzungsvorgabe in eine Änderung einer Position der Lenkmechanik (8) umzusetzen,
**dadurch gekennzeichnet,**
**dass** das Lenksystem (1) eine Übersetzungsvorgabe-Änderungseinrichtung (12) aufweist, die ausgestaltet ist, abhängig von einer Information (17) über einen geänderten Zustand einer Einrichtung oder eines Systems des Fahrzeugs die erste Übersetzungsvorgabe durch eine zweite Übersetzungsvorgabe für die Umsetzung der Änderung der Lenkvorgabe in die Änderung der Position der Lenkmechanik (8) zu ersetzen.

2. Lenksystem (1) nach Anspruch 1, wobei der geänderte Zustand einer Einrichtung oder eines Systems des Fahrzeugs ein Zustand ist, in dem eine höhere Wahrscheinlichkeit als in dem Zustand vor dem geänderten Zustand für ein Auftreten eines Fehlers oder einer Leistungsreduktion des Lenksystems (1) besteht.

3. Lenksystem (1) nach Anspruch 1 oder 2, wobei die Einrichtung, auf die/das sich der geänderte Zustand bezieht, Teil des Lenksystems (1) ist und/oder eine Einrichtung zur Versorgung und/oder Steuerung des Lenksystems (1) ist oder wobei das System, auf die/das sich der geänderte Zustand bezieht, das Lenksystem (1) ist und/oder ein System zur Versorgung und/oder Steuerung des Lenksystems (1) ist.

4. Lenksystem (1) nach einem der Ansprüche 1 bis 3, wobei der geänderte Zustand
- ein Zustand einer Überlastung eines Antriebs ist, der ausgestaltet ist, die Änderung der Position der Lenkmechanik (8) zu bewirken,
- ein Zustand ist, in dem eine Leistungsfähigkeit eines Antriebs eingeschränkt ist, der ausgestaltet ist, die Änderung der Position der Lenkmechanik (8) zu bewirken, oder in dem Bedarf für eine reduzierte Maximalleistung des Antriebs besteht, insbesondere ein Zustand erhöhter Temperatur des Antriebs ist,
- ein Zustand einer erhöhten Belastung eines Energieversorgungssystems an Bord des Fahrzeugs ist, ein Zustand einer Überlastung des Energieversorgungssystems ist und/oder ein Fehlerzustand des Energieversorgungssystems ist, wobei das Energieversorgungssystem dazu ausgestaltet ist, zumindest einen Teil des Lenksystems (1) mit Energie für einen Betrieb des Lenksystems (1) zu versorgen, oder ein Zustand ist, in dem eine erhöhte Belastung oder eine Überlastung des Energieversorgungssystems vermieden werden soll, und/oder
- ein Zustand ist, in dem Bedarf für eine reduzierte mechanische Belastung der Lenkmechanik (8) besteht.

5. Lenksystem (1) nach einem der Ansprüche 1 bis 4, wobei die Lenkvorgabe ein Lenkradwinkel ist, der von dem Fahrer durch Drehen eines Lenkrades (3) einstellbar ist.

6. Fahrzeug, insbesondere Kraftfahrzeug, mit einem Lenksystem (1) nach einem der Ansprüche 1 bis 5 aufweist.

7. Verfahren zum Betreiben eines Steer-by-Wire (SbW) Lenksystems (1) in einem Fahrzeug, insbesondere in einem Kraftfahrzeug, wobei das Lenksystem (1) ausgestaltet ist, abhängig von einer Lenkvorgabe, die einem Fahrer-Wunsch des Fahrers des Fahrzeugs entspricht, mittels einer Lenkmechanik (8) einen Lenkwinkel zumindest eines gelenkten Rades (9) des Fahrzeugs einzustellen, und ausgestaltet ist, eine Änderung der Lenkvorgabe gemäß einer ersten Übersetzungsvorgabe in eine Änderung einer Position der Lenkmechanik (8) umzusetzen,
**dadurch gekennzeichnet,**
**dass** abhängig von einer Information (17) über einen geänderten Zustand einer Einrichtung oder eines Systems des Fahrzeugs die erste Übersetzungsvorgabe durch eine zweite Übersetzungsvorgabe für die Umsetzung der Änderung der Lenkvorgabe in die Änderung der Position der Lenkmechanik (8) ersetzt wird.

8. Verfahren nach Anspruch 7, wobei der geänderte Zustand einer Einrichtung oder eines Systems des Fahrzeugs ein Zustand ist, in dem eine höhere Wahrscheinlichkeit als in dem Zustand vor dem geänderten Zustand für ein Auftreten eines Fehlers oder einer Leistungsreduktion des Lenksystems (1) besteht.

9. Verfahren nach Anspruch 7 oder 8, wobei die Einrichtung, auf die/das sich der geänderte Zustand bezieht, Teil des Lenksystems (1) ist und/oder eine Einrichtung zur Versorgung und/oder Steuerung des Lenksystems (1) ist oder wobei das System, auf die/das sich der geänderte Zustand bezieht, das Lenksystem (1) ist und/oder ein System zur Versorgung und/oder Steuerung des Lenksystems (1) ist.

10. Verfahren nach einem der Ansprüche 7 bis 9, wobei der geänderte Zustand
- ein Zustand einer Überlastung eines Antriebs ist, der ausgestaltet ist, die Änderung der Position der Lenkmechanik (8) zu bewirken,
- ein Zustand ist, in dem eine Leistungsfähigkeit eines Antriebs eingeschränkt ist, der ausgestaltet ist, die Änderung der Position der Lenkmechanik (8) zu bewirken, oder in dem Bedarf für eine reduzierte Maximalleistung des Antriebs besteht, insbesondere ein Zustand erhöhter Temperatur des Antriebs ist,
- ein Zustand einer erhöhten Belastung eines Energieversorgungssystems an Bord des Fahrzeugs ist, ein Zustand einer Überlastung des Energieversorgungssystems ist und/oder ein Fehlerzustand des Energieversorgungssystems ist, wobei das Energieversorgungssystem dazu ausgestaltet ist, zumindest einen Teil des Lenksystems (1) mit Energie für einen Betrieb des Lenksystems (1) zu versorgen, oder ein Zustand ist, in dem eine erhöhte Belastung oder eine Überlastung des Energieversorgungssystems vermieden werden soll, und/oder
- ein Zustand ist, in dem Bedarf für eine reduzierte mechanische Belastung der Lenkmechanik (8) besteht.

11. Verfahren nach einem der Ansprüche 7 bis 10, wobei die Lenkvorgabe ein Lenkradwinkel ist, der von dem Fahrer durch Drehen eines Lenkrades (3) einstellbar ist.
